Europäisches Patentamt

European Patent Office

Office européen des brevets

(19)

(11) EP 1 454 963 A1

(12) EUROPEAN PATENT APPLICATION
published in accordance with Art. 158(3) EPC

(43) Date of publication:
08.09.2004 Bulletin 2004/37

(51) Int Cl.7: C08L 101/00

(21) Application number: 02783579.2

(86) International application number:
PCT/JP2002/012148

(22) Date of filing: 21.11.2002

(87) International publication number:
WO 2003/044093 (30.05.2003 Gazette 2003/22)

(84) Designated Contracting States:
AT BE BG CH CY CZ DE DK EE ES FI FR GB GR
IE IT LI LU MC NL PT SE SK TR

(30) Priority: 21.11.2001 US 989160

(71) Applicant: Daikin Industries, Ltd.
Osaka-shi, Osaka 530-8323 (JP)

(72) Inventors:
• KUBO, Katsuyoshi
  Rye, NY 10580 (US)
• OTSUKA, Takahide
  Yardley, PA 19067 (US)
• OKA, Masahiko
  Mahwah, NJ 07430 (US)

• MIYAMORI, Tsuyoshi,
  c/o DAIKIN INDUSTRIES, LTD.
  Settsu-shi, Osaka 566-8585 (JP)
• STEWART, Charles
  - (US)

(74) Representative: HOFFMANN - EITLE
Patent- und Rechtsanwälte
Arabellastrasse 4
81925 München (DE)

Remarks:
A request for correction of the description and claim
16 has been filed pursuant to Rule 88 EPC. A
decision on the request will be taken during the
proceedings before the Examination Division.

(54) RESIN COMPOSITION AND PROCESS FOR PRODUCING MOLDING

(57) The present invention is a resin composition prepared by formulating an engineering plastic with a fluorine-containing polymer wherein said fluorine-containing polymer accounts for 0.005 to 1 mass% of the total of a mass of said engineering plastic and a mass of said fluorine-containing polymer, wherein said fluorine-containing polymer is a perfluoropolymer, and wherein said resin composition is used for extrusion molding or injection molding.

EP 1 454 963 A1

**Description**

CROSS REFERENCE TO RELATED APPLICATIONS

This application is a continuation-in-part of U.S. Application No. 09/989,160 filed November 21, 2001, the disclosure of which is incorporated herein by reference.

FIELD OF THE INVENTION

The present invention relates to a resin composition conducive to improved molding processability of engineering plastics, and to a method of producing shaped articles using the resin composition.

BACKGROUND ART

A moldable polymer is generally formed into a shaped article by melting at an elevated temperature in an extruder, molding the resulting melt by means of a metal mold or die, and cooling the melt. The molding technology includes but is not limited to extrusion molding, in which the molten material is transported by a revolving screw within the barrel of an extruder to a die for molding.

In such polymer molding, the extrusion pressure and extrusion torque usually increase with an increase in friction between the molten material and the die for polymers having the same melt-fluidity. An excessively high extrusion pressure or extrusion torque overloads the extruder and may cause problems in commercial production, such as an automatic stop of the extruder.

Furthermore, in polymer molding, if the extrusion pressure or extrusion torque is not constant but changes unexpectedly, problems will be encountered in that the resulting shaped article tends to be defective in surface smoothness or gloss, for instance. The result is that it becomes difficult to supply products of consistently acceptable quality, or product yield and productivity are sacrificed.

For the purpose of improving polymer molding processability, there have been proposals to add a processing aid to the polymer. As such a processing aid, a fluorine-containing polymer in low concentration is known to be useful in alleviating adverse events such as the incidence of melt fracture or high torque which limits the polymer extrusion speed.

U.S. Patent 5,010,130 describes an auxiliary agent-blended resin composition comprising, as a main component, a hardly melt-moldable resin and, as another component, polytetrafluoroethylene (PTFE) having a viscosity of 400 Pa.s at 200°C, or a tetrafluoroethylene (TFE) copolymer melting at a molding temperature in the case of a crystalline resin or having a Tg not less than the molding temperature in the case of a non-crystalline resin. However, this technology is directed to resins which can be hardly melt-molded, and the fluororesin is said to be a resin having a melting point not higher than the melting point of the main resin.

U.S. Patent 3,125,547 discloses the use of a small quantity of a fluorocarbon polymer as a continuous-feed slip agent in the extrusion molding of a hydrocarbon polymer such as low-density polyethylene (LDPE), and comments that the fluororesin which is solid at the processing temperature does little or nothing to improve the extrusion characteristics of hydrocarbon polymers.

U.S. Patent 4,855,360 discloses a thermoplastic olefin resin composition comprising a poly(oxyalkoxy)olefin for improving flow on the die surface to reduce melting defects in the extrudate. A fluororesin is incorporated in a weight ratio of 1/1 to 1/10 relative thereto, or in a proportion of 0.005 to 0.2 wt. % relative to the polyolefin resin composition.

U.S. Patent 4,904,735 discloses a technology in which a fluororesin which is molten in the case of a crystalline resin or exceeds Tg in the case of a non-crystalline resin at a molding temperature is incorporated into a hardly melt-moldable resin comprising at least one monoolefin resin such as LDPE.

U.S. Patent 5,266,639 discloses a technique of using a TFE/hexafluoropropylene (HFP) copolymer (FEP) having a specific infrared ratio (HFP index) of 6.4 to 9.0 and a melt viscosity of $0.1 \times 10^3$ to $10 \times 10^3$ poise as a polyolefin-molding aid for preventing melt fracture and retrenching the molding start time.

U.S. Patent 5,464,904 discloses a technique of blending a polyolefin resin with a fluororesin having a hydrogen atom content of not more than 2 wt %, a melt viscosity of $0.1 \times 10^3$ to $10 \times 10^3$ poise, and a melting end temperature (Tm) of 170 to 265°C.

U.S. Patent 5,547,761 discloses a'technique of coating a polyolefin with an FEP having an HFP index of 6.4 to 9.0 and a Tm value of 180 to 255°C.

U.S. Patent 5,707,569 discloses a technique of formulating a fluororesin in the process for extrusion-molding a polyolefin composition comprising a bivalent or trivalent metal ion and an organic or inorganic anion for the purpose of eliminating the effect of $Ca^{2+}$.

However, these techniques are only relevant to polyolefin polymers obtained by vinyl polymerization, such as polyethylene, polypropylene or the like, and none of the literature teaches a technique using a fluorine-containing polymer for the purpose of improving the molding processability of engineering plastics such as polyamides and polyetheretherketones.

U.S. Patent 5, 132, 368 discloses a composition including a hardly melt-processable polymer and, based on the polymer, 0.002-0.5 wt % of a fluoropolymer processing aid, citing a formulation comprising nylon 66 and FEP or irradiated PTFE as an example. However, this fluoropolymer has at least 100 units of a specified polar functional group, such as ionic groups, e.g., -COOH and -SO$_3$H, and/or -COF or the like, per $10^6$ carbon atoms at the chain terminus. This patent publication comments that the processing aid is bound to the metal or metal oxide die surface chemically or physically to reduce the resistance to flow of the polymer melt on the die surface, that this additive no longer functions as an effective processing aid when the polar terminal groups become nonexistent by a treatment such as moist heat treatment, and that the die pressure and variation thereof cannot be decreased at this fluoropolymer concentration. Therefore, this technique is different from the present invention with respect to the characteristics of fluorine-containing polymer and the effect of the invention. This technique allows a slip layer to persist on the metal or the like by virtue of the polar functional groups over an extended period of the molding process, while the reactivity to the hardly melt-processable polymer is also increased to cause added friction so that the extrusion pressure cannot be sufficiently depressed.

U.S. Patent 6, 380, 313 discloses, as a processing aid for a thermoplastic resin such as LDPE, the use of a fluororesin comprising a perfluoro (vinyl ether) unit. However, the use of a perfluoropolymer by adding the same to meltable engineering plastics has not been disclosed.

SUMMARY OF THE INVENTION

It is therefore an object of the present invention to provide a resin composition which, in the molding of meltable engineering plastics, as distinguished from the hardly melt-moldable resins or polyolefin resins treated in the above prior art patent publications, is conducive to improved molding processability in consideration of extrusion pressure, extrusion torque and other process parameters, which further insures stable molding processability in consideration of extrusion pressure, extrusion torque and the like, and which can easily be crystallized.

The present invention is a resin composition prepared by formulating an engineering plastic with a fluorine-containing polymer wherein said fluorine-containing polymer accounts for 0.005 to 1 mass% of the total of a mass of said engineering plastic and a mass of said fluorine-containing polymer, wherein said fluorine-containing polymer is a perfluoropolymer, and wherein said resin composition is used for extrusion molding or injection molding. The fluorine-containing polymer is preferably one obtainable by polymerization using tetrafluoroethylene. The engineering plastic is preferably a polyamide or a polyetheretherketone. The resin composition is preferably adapted for use as a molding material. The present invention is further directed to a method of producing a shaped article which comprises melting the above resin composition and molding by extrusion molding or injection molding.

The present invention is now described in further detail below.

BRIEF DESCRIPTION OF DRAWINGS

In Fig. 1, the graph (a) represents a stress-strain curve (S-S curve) of the tensile test on the shaped article obtained in Comparative Example 14, and the graph (b) represents an S-S curve of the tensile test on the shaped article obtained in Comparative Example 15.

Fig. 2 represents an S-S curve of the tensile test on the shaped article obtained in Example 16.

DETAILED DESCRIPTION OF THE INVENTION

The resin composition of the invention is prepared by formulating an engineering plastic with a fluorine-containing polymer.

The fluorine-containing polymer is a polymer having fluorine atoms bound to some or all of the carbon atoms constituting the backbone chain of the polymer. Such fluorine-containing polymers include polymers obtainable by polymerizing, as monomer component, one or more than one perfluoromonomers such as tetrafluoroethylene (TFE), hexafluoropropylene (HFP), perfluoro(alkyl vinyl ether) (PAVE).

The perfluoromonomer mentioned above is a monomer having a main chain composed of carbon and fluorine and, in some cases, oxygen as well, with no hydrogen atom bound to the main chain carbon atom, thus including perfluorovinyl monomers such as TFE, HFP, etc., and also inclusive of PAVE monomers such as perfluoro(propyl vinyl ether) (PPVE). The oxygen atom is usually ether oxygen.

In terms of molecular structure, the fluorine-containing polymer includes but is not limited to perfluoropolymers such as polytetrafluoroethylene (PTFE), TFE/HFP copolymer (FEP), TFE/PAVE copolymer (PFA) and the like. The above perfluoropolymers are polymers obtainable by polymerizing any of these perfluoromonomers as the monomer component to the exclusion of other types of monomer components. Therefore, the above fluorine-containing polymer includes one in which repetitive units are derived only from perfluoromonomers and in which a structural unit derived from a polymerization initiator or a chain transfer agent presents at the terminus thereof. PTFE, mentioned above, includes low-molecular-weight PTFE having an average molecular weight generally of not more than 1,000,000, preferably of not more than 100,000, and PTFE having a core-shell structure as described in JP Kokai H4-154842 and JP Kokai H5-279579, among others.

The fluorine-containing polymer may comprise one that is obtainable by polymerizing, together with (co)monomers essential to the above-mentioned copolymers, one or more other comonomers in a minor proportion, which is not more than 5 mass %, preferably not more than 1 mass %, and more preferably not more than 0. 5 mass % based on the total amount of the monomer component, said minor comonomer including, for example, non-fluorine-containing vinyl monomers such as ethylene (Et), propylene (Pr), etc.; chlorofluorovinyl monomers such as chlorotrifluoro-ethylene (CTFE); fluorine-containing vinyl monomers other than the above perfluoromonomers such as vinylidene fluoride (VdF) , vinyl fluoride, trifluoroethylene, etc.; and monomers having hydroxyl, carbonyl or other functional groups, and even monomers having cyclic structures. The cyclic structure includes but is not limited to cyclic ether structures such as cyclic acetal structures, preferably such that at least two carbon atoms constituting a cyclic ether structure are part of the main chain of the fluorine-containing polymer.

The fluorine-containing polymer obtainable by copolymerizing a minor proportion of comonomers together with (co)monomers essential to the above-mentioned copolymers includes but is not limited to FEP obtainable by copolymerizing a small amount of PAVE such as PPVE, and the like.

The comonomer to be copolymerized as a minor comonomer is preferably in a proportion of not more than 5 mass %, more preferably not more than 1 mass %, still more preferably not more than 0.5 mass % based on the total amount of the monomer component. If the proportion exceeds 5 mass %, the objective copolymer characteristics may not be expressed.

From the standpoint of meltability, elasticity and application, etc., the above-mentioned fluorine-containing polymer may be a non-melt-moldable fluororesin such as PTFE; a melt-moldable fluororesin such as FEP, PFA or the like.

The fluorine-containing polymers can be used independently or in combination among the above perfluoropolymers.

The fluorine-containing polymer is preferably a perfluoropolymer, more preferably a perfluoropolymer which is a melt-moldable fluororesin, and still more preferably FEP or PFA.

Though it depends on the end use, the fluorine-containing polymer may contain TFE as a monomer component for improving the moldability of the resin composition of the invention, and is preferably a polymer containing TFE as a monomer component that is a resin. The polymer containing TFE as a monomer component includes PTFE. The above fluorine-containing polymer, provided that it is one obtainable by polymerizing monomer component comprising TFE, may be one obtainable by polymerizing other comonomer(s) such as the above-mentioned perfluoromonomers other than TFE; non-fluorine-containing vinyl monomers; fluorine-containing vinyl monomers exclusive of the perfluoromonomers; monomers having hydroxyl, carbonyl or other functional groups, and monomers having cyclic structures.

The fluorine-containing polymer preferably has, at the terminus of the main chain or in a side chain, a few polar functional groups that may be reactive to the above engineering plastics. The polar functional group that is reactive to engineering plastics is not particularly limited and includes polar functional groups such as -COF, -COOM, -SO$_3$M and -OSO$_3$M. In the above formulae, M represents a hydrogen atom, a metal cation or a quaternary ammonium ion. More preferably, the fluorine-containing polymer has substantially no polar functional group that is reactive to engineering plastics.

As used herein, the term "having substantially no polar functional group" means that any such polar functional group, if present at the terminus of the main chain or in a side chain, is present only in a small number of an order not enabling it to express its inherent function and not being involved in the reaction with engineering plastics. The number of such polar functional groups present per $10^6$ carbon atoms in the fluorine-containing polymer is not more than 50, preferably not more than 30, and more preferably not more than 10.

Because of the very fact that the fluorine-containing polymer substantially does not have the polar functional group reactive to engineering plastics, the hydrolysis or other reaction of the engineering plastic in preparing the resin composition of the invention or in the course of molding, which will be described below, can be inhibited. As a result, the inherent characteristics of the engineering plastic can be fully exploited.

Since the fluorine-containing polymer substantially does not have polar functional groups, this fluorine-containing polymer reduces the friction of the engineering plastic with the surfaces of the die and screw, the internal wall of the barrel, etc. of an extruder, for instance, thus not inhibiting a lubricating property. Hence, the fluorine-containing polymer can realize reductions in extrusion pressure, extrusion torque and the variation of these parameters, consequently facilitating molding-processability of the resin composition of the invention.

The mechanism of this reduction of friction is not fully clear but is considered to be as follows. Within a molding machine, the engineering plastic has in many cases polar moieties such as amide bonds in the main chain structure thereof, and such engineering plastics are highly adhesive to metal or metal oxide members which are at the surfaces of part of the molding machine, such as a die, screw and barrel, for instance. However, because the fluorine-containing polymer having very low adhesivity in the main chain structure and substantially not having the polar functional group of the type described above is interposed between the engineering plastic and the metal or the like members, the adhesion between the resin composition and molding machine is reduced.

While the fluorine-containing polymer substantially does not have polar functional groups, it is present on the metal or metal oxide members of the internal surfaces of the molding machine to exhibit a lubricating effect on the flow of the engineering plastic throughout molding. It is by surface tension that the fluorine-containing polymer is present on the metal or metal oxide surface, and it is considered attributable to the force of one component of a phase separation system to diminish the interface with the other component as much as possible. Therefore, provided that it is steadily supplied, the fluorine-containing polymer need not have polar functional groups of its own.

The number of such polar functional groups available in the fluorine-containing polymer can be determined, for example, by the method described in U.S. Patent 5,132,368. Thus, the absorbance of the film obtained by compression-molding of the fluorine-containing polymer may be determined with an infrared spectrophotometer. From this value of absorbance and the calibration factors (CF) determined by measuring model compounds containing the above polar functional groups, the number of end groups per $10^6$ carbon atoms in the fluorine-containing polymer can be calculated by means of the following equation.

$$\text{(the number of polar functional groups per } 10^6 \text{ carbon atoms)} = \text{(absorbance)} \times \text{(CF)} \times \text{(thickness of polymer film)}^{-1}$$

Regarding the wavelength values ($\mu$m) of the polar functional groups and the corresponding calibration factors determined with model compounds, the following figures can be mentioned by way of example: -COF = 5.31 $\mu$m, 406; -COOH = 5.52 $\mu$m, 335; and -COOCH$_3$ = 5.57 $\mu$m, 368.

The fluorine-containing polymer can be synthesized by polymerizing the monomer component by conventional polymerization techniques such as emulsion polymerization, suspension polymerization, solution polymerization, block polymerization, or gas-phase polymerization.

The polymerization reaction is optionally carried out in the presence of a chain transfer agent. The chain transfer agent mentioned above is not particularly limited but includes hydrocarbons such as isopentane, n-pentane, n-hexane, cyclohexane, etc.; alcohols such as methanol, ethanol, etc.; and halogenated hydrocarbons such as carbon tetrachloride, chloroform, methylene chloride, methyl chloride, etc.; although methanol is particularly preferred.

The chain transfer agent mentioned above may be used with advantage for insuring that the fluorine-containing polymer substantially will not have polar functional groups. Aside from the above method, the following alternative method can be mentioned. Thus, in the case of emulsion polymerization, a polymer terminating in the polar functional group is first obtained, but such polar functional groups can be eliminated by subjecting the polymer to water vapor treatment, for instance, to stabilize the chain ends. The above polar functional groups can be converted to, for example, -CF$_3$ or -CONH$_2$ by fluorine gas (F$_2$) treatment or ammonium treatment, or to -CF$_2$H by the above water vapor treatment or hydrogen treatment. Therefore, the above fluorine-containing polymer may have -CF$_3$, -CONH$_2$, -CF$_2$H and the like. The above -CF$_3$, -CONH$_2$, -CF$_2$H and the like are different from the above polar functional group. In suspension polymerization, a polymer substantially not having polar functional groups can be obtained without resort to such treatment.

The melting point of said fluorine-containing polymer is not particularly limited, but is preferably a temperature not higher than a processing temperature of the engineering plastic to be used and is more preferably a temperature not higher than the melting point of the engineering plastic to be used. This is because the polymer preferably has already been melted when the engineering plastic to be used melts in a molding machine.

The above fluorine-containing polymer is preferably one having the melting point of not lower than 200°C. The resin composition of the present invention can employ a fluorine-containing polymer having the melting point of not lower than 200°C since the engineering plastic(s) generally having high melting point (s) is used therein. More preferably, the above fluorine-containing polymer is one having the melting point of not lower than 240°C. The melting point of the above fluorine-containing polymer may be, provided that it is not lower than 200°C, not higher than 350°C.

The engineering plastic formulated together with the fluorine-containing polymer in the resin composition of the invention is usually a substance having excellent heat resistance, high strength and high dimensional stability and which can be used as a substitute for metal in some instances, thus including various resins which can be used as materials for machines, machine component parts, electrical/electronic parts, etc., which are required to have good mechanical and other dynamic properties.

In the present specification, the above engineering plastic is a high performance plastic which is applicable as the materials for construction or for machineries, is mainly for industrial use, and does not include one for fiber use.

The engineering plastic has a heat resistance value of not less than 100°C, a tensile strength of not less than 49 MPa (5 kgf·mm$^{-2}$), and a flexural modulus of not less than 2 GPa (200 kgf·mm$^{-2}$). Materials devoid of such characteristics cannot be used with advantage in the ordinary uses for engineering plastics, where mechanical strength at high temperature is required. As the above engineering plastic, one having the flexural modulus of not less than 2.4 GPa (240 kgf·mm$^{-2}$) is preferably used.

The "heat resistance value of not less than 100°C" means that the melting point in case of a crystalline resin, or the glass transition point in case of a non-crystalline resin, is not less than 100°C and that no attenuation of mechanical strength takes place at temperatures less than 100°C. Deflection Temperature Under Load (DTUL; ASTM D 648) is generally used as the indicator of the above heat resistance value. The above DTUL is the temperature that a test bar, which is prepared from the resin to be examined and has been heated under the load of 1.82 MPa or 0.45 MPa, starts deforming. The engineering plastic generally has a heat resistance value of not less than 150°C, including those species called special engineering plastics or super engineering plastics.

The tensile strength mentioned above is the maximum tensile stress at break, and is the value found by dividing the maximum load by the initial sectional area of the testpiece. In this specification, the tensile strength is a value determined by the method directed in ASTM D 638-00 (2000). The engineering plastic generally has a tensile strength within the range of 49 to 200 MPa in terms of the value as determined for a raw, unreinforced resin material with the standard composition.

The flexural modulus mentioned above is the modulus calculated from the load-deflection curve constructed for a testpiece in 3-point and 4-point bending tests. In the context of this specification, flexural modulus is a value determined by the method directed in ASTM D 790-00 (2000). The engineering plastic generally has a flexural modulus in the range of 2 to 7 GPa as determined for a raw, unreinforced resin material with the standard composition. As the above flexural modulus, more preferred lower limit is 2.4 GPa.

The resin composition of the invention is used for the melt-molding described hereinafter and, as such, is naturally a thermoplastic resin.

The engineering plastic is generally a plastic obtainable by polycondensation or ring-opening polymerization, such as polyamide (PA), polyester or polyether; a plastic, for example, polyacetal (POM), obtainable by polymerization of carbonyl groups such as formaldehyde, etc.; or a certain kind of vinyl polymer which is described hereinafter.

The engineering plastic is not particularly limited insofar as it has the above-mentioned properties, thus including PAs such as nylon 6, nylon 11, nylon 12, nylon 46, nylon 66, nylon 610, nylon 612, nylon MXD6, etc.; polyesters such as polyethylene terephthalate (PET), polybutylene terephthalate (PBT), polyarylates, aromatic polyesters (including liquid crystal polyesters), polycarbonates (PC), etc.; polyacetals (POM) ; polyethers such as polyphenylene oxide (PPO), modified polyphenyleneether, polyetheretherketone (PEEK), etc.; polyamideimides (PAI) such as polyaminobismaleimide etc.; polysulfone resins such as polysulfone (PSF), polyethersulfone (PES) , etc. ; certain kinds of vinyl polymers such as ABS resin, poly-4-methylpentene-1 (TPX resin), etc.; polyphenylene sulfide (PPS); polyketone sulfides; polyetherimides; and polyimides (PI), among others. The nylon MXD6 mentioned above is a crystalline polycondensate obtained from m-xylenediamine (MXD) and adipic acid. Particularly preferred are PA and PEEK.

From the standpoint of good heat resistance, the above engineering plastic may be one comprising a polymer having one or more phenylene group(s) in the main chain backbone of the polymer. The engineering plastic comprising the polymer having the phenylene group (s) includes, for example, nylon MXD6, etc., among the above-mentioned PAs; poly(ethylene terephthalate) (PET), poly(butylene terephthalate) (PBT), polyarylates, aromatic polyesters including liquid crystal polyesters, etc., among the above-mentioned polyesters; poly(phenylene oxide) (PPO), modified polyphenyleneether, polyetheretherketone (PEEK), etc., among the above-mentioned polyethers; polysulfone resins such as polysulfone (PSF), polyethersulfone (PES), etc.; polyaminobismaleimide, ABS resin, poly(phenylene sulfide) (PPS), among others.

From the standpoint of good toughness and fatigue resistance, the above engineering plastic may preferably be one comprising a polymer not having phenylene groups. The engineering plastic comprising the polymer not having phenylene groups includes, for example, nylon 6, nylon 11, nylon 12, nylon 46, nylon 66, nylon 610, nylon 612, etc. among the above-mentioned PAs; the above-mentioned polyacetals; and poly(4-methylpentene-1) (TPX resin), etc.

The above engineering plastic can be used independently or in a combination of two or more species.

Depending on their kinds, the engineering plastics can each be synthesized by known techniques.

As to the resin composition of the present invention, the fluorine-containing polymer accounts for 0.005 to 1 mass % of the total of a mass of the engineering plastic and a mass of the fluorine-containing polymer. When the fluorine-containing polymer is less than 0.005 mass %, reductions in extrusion pressure and extrusion torque are insufficient, while when the fluorine-containing polymer exceeds 1 mass %, the shaped article thus obtained may develop opacity or white turbidity. Moreover, the effect of the fluorine-containing polymer is not commensurate with an excessively increased amount, thus leading to economic disadvantage. The preferred lower limit is 0.01 mass % and the preferred upper limit is 0.5 mass % of the total of the mass of the engineering plastic and the mass of the fluorine-containing polymer.

The combination of the fluorine-containing polymer and the engineering plastic is not particularly limited, but preferably includes PTFE, FEP and/or PFA with the engineering plastic comprising a polymer having a phenylene group; FEP with the engineering plastic comprising a polymer not having phenylene groups.

The combination of the fluorine-containing polymer and the engineering plastic is not particularly limited, but preferably includes, from standpoint of the viscosity in the course of melt-processing, FEP with nylon 66; FEP with nylon 46; and PTFE, FEP and/or PFA with PEEK. Among them, more preferred are combinations of FEP with nylon 66; and PTFE with PEEK.

The resin composition of the invention may have other components in addition to the fluorine-containing polymer and the engineering plastic. Such other components are not particularly limited but may be a reinforcing material such as a whisker, for example potassium titanate, glass fiber, asbestos fiber, carbon fiber, other high-strength fiber, glass powder, etc.; stabilizer such as mineral, flakes, etc.; lubricating agent such as silicone oil, molybdenum disulfide, etc.; pigment; conductive agent such as carbon black; impact resistance improving agent such as rubber; and/or other additives.

The method of preparing the resin composition of the invention is not particularly limited but includes hitherto-known methods. A typical method comprises formulating the fluorine-containing polymer and the engineering plastic in the formulating ratio mentioned above, optionally adding the other components, and melt-kneading the mixture optionally under heating.

In the formulating step, the other components may be blended with the fluorine-containing polymer and/or the engineering plastic in advance, or added at the time of mixing the fluorine-containing polymer and the engineering plastic.

The above fluorine-containing polymer and engineering plastic should exist in a ratio within the above-mentioned range at the time when the resin composition is molded at the latest. Therefore, the formulating method includes but is not limited to a method which comprises blending the engineering plastic with the fluorine-containing polymer in a ratio within the above-mentioned range from the beginning. Another typical formulating method is a serial method which comprises formulating the fluorine-containing polymer, engineering plastic and optional other components to prepare a composition (1) in which the proportion of the fluorine-containing polymer is higher than the range mentioned above, and then supplementing this composition (1) with a further amount of the engineering plastic before or at the molding stage so as to give a composition (2) in which the ratio of the engineering plastic to the fluorine-containing polymer falls within the above-defined range.

Regarding the latter serial method, the composition (1) is sometimes called a master batch and the fluorine-containing polymer in the composition (1) is preferably more than 0.005 mass % and not more than 20 mass %, more preferred lower limit is 1 mass %, still more preferred lower limit is 2 mass %, more preferred upper limit is 10 mass % of the total of the mass of the engineering plastic and the mass of the fluorine-containing polymer. The above composition (2) is sometimes called "a premix".

The blending method is not particularly limited but, for example, a mixer such as a mill which is commonly used for production of resin compositions, such as molding compositions, can be used under conventional operating conditions. Here, when particles of the fluorine-containing polymer are uniformly dispersed between and among particles of the engineering plastic, the molding processability of the resulting resin composition of the invention tends to be improved more prominently through reductions in extrusion torque and extrusion pressure, among other effects. Therefore, sufficient blending of the components is preferred, such that the particles of the fluorine-containing polymer are almost uniformly adhered to the surface of each particle of the engineering plastic.

The term "formulating" as used herein means blending the engineering plastic and the fluorine-containing polymer or preparing a master batch prior to preparation of a premix. The formulating may be conducted by melting the engineering plastic and/or the fluorine-containing polymer (melt-kneading), or by blending these materials with a mil and the like without melting. The engineering plastic and the fluorine-containing polymer may independently be in the form of pellets, granules or a powder. It is preferable, however, so as to allow the fluorine-containing polymer to be present efficiently and uniformly on the surface of the (pellets of the) engineering plastic, the engineering plastic is in the form of pellets, and the fluorine-containing polymer is in the form of powder. In this case, blending is preferably conducted without melting the engineering plastic and the fluorine-containing polymer.

The above-described preferred formulating allows the fluorine-containing polymer to be present at the interface between the engineering plastic and molding machine more efficiently than formulating by melt-kneading or blending the engineering plastic and the fluorine-containing polymer both in the form of a powder without melting, or blending the engineering plastic and the fluorine-containing polymer both in the form of pellets without melting.

The engineering plastic and the fluorine-containing polymer may be of any desired form, for example, powders, granules or pellets. Typically, the engineering plastic may be in the form of pellets, and the fluorine-containing polymer may be in the form of pellets or a powder. The fluorine-containing polymer is preferably in the form of a powder because it is easy to mix sufficiently and uniformly.

As a result, in the molding of the resin composition of the invention, it is considered that particularly in the stage where the resin composition begins to melt down to the stage where the molten mass is molded, particles of the fluorine-containing polymer adhering to the surface of particles of the engineering plastic are present in large number on the internal surface of the machine in contact with the resin composition. Thus, a sufficient lubrication effect is expressed to enable the resin composition to travel smoothly within the molding machine. As a result, it is also considered that favorable effects on processability such as drastic reductions in extrusion torque and extrusion pressure are realized.

The internal surface of the machine with which the resin composition contacts as mentioned above is, taking an extruder as an example, the surfaces of the screw in the melt-extrusion zone, the barrel surrounding and housing the screw, and the die at the extruder tip.

After or along with the blending, the composition may be melted by heating and kneading. Generally, this heating is preferably carried out at a temperature at or higher than the melting point of the engineering plastic so that while the engineering plastic is held in a molten condition, particles of the fluorine-containing polymer may be uniformly dispersed in the melt.

In the pellets available on cooling after the above melt-kneading operation, the fluorine-containing polymer is present not only on the pellet surface but also within the pellet according to its concentration. Therefore, it is considered that in the course of molding the resin composition of the invention, particularly after initiation of melting of the pellets or the like, the fluorine-containing polymer migrates out from inside of the pellet to reduce interactions between molecules of the engineering plastic and between segments of the molecule and thereby prevents blocking, thus facilitating the transport of the engineering plastic and hence the resin composition comprising the engineering plastic through the extruder. Accordingly, the extrusion torque and extrusion pressure are reduced as a consequence, thus contributing to improved molding processability.

The resin composition of the invention, particularly when it is a powdery blend, may be subjected to size selection, where necessary.

The resin composition of the invention may be of any desired form, for example, a powder, granules or pellets.

The resin composition of the invention, thus obtained, can be used as a molding material.

The resin composition of the present invention, by incorporating the above engineering plastic into the above fluorine-containing polymer can, as mentioned above, not only improve molding processability such as reductions in extrusion torque and extrusion pressure but also be easily plasticized.

The above resin composition is, therefore, the one with thermal stability improved, and in case of the crystalline resin, the one easily crystallizable. The above resin composition can stabilize moldability without being degraded in the course of molding since it is improved in thermal stability. The above resin composition, since it can be easily crystallized, is excellent in moldability even the temperature of the die or metal mold is low in the course of molding, and enables the shaped article hardly to deform when it is removed from the metal mold since the crystal easily grows even under rapid cooling and therefore can shorten the molding cycle time. In this specification, such property as being easily crystallized is sometimes called as "easily crystallizable property".

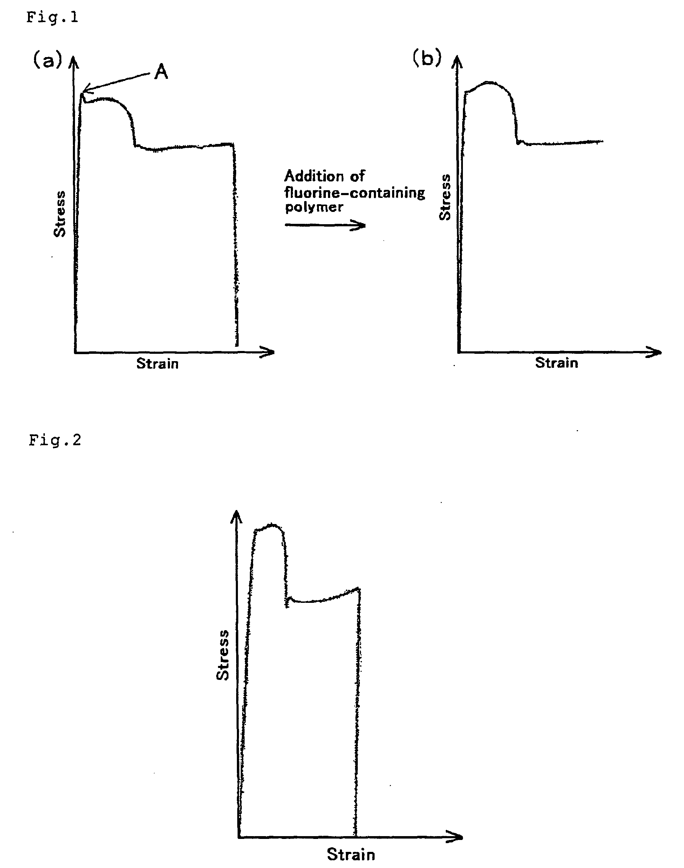

In the course of molding, the resin molding, which is obtained by molding resin (s) without adding a processing aid, a part to become the surface layer of the resin molding is exposed under huge opposing force at the interface with the metal mold during the flow, thus the resin molecules therein are oriented; however, molecules inside (inner layer) of the resin molding are less oriented. The state of the crystallization differs between the surface layer and the inside because of the cooling rate difference therebetween, thus huge residual warp may sometimes be generated inside of the resin molding. In the above resin molding, because of the influence of the above residual warp as well as the difference in the orientation or cooling rate, huge shear between the crystals of the surface layer and the crystals inside is developed, hence the resin molding may sometimes be one which gives a peak, as indicated as A in the graph (a) of Fig. 1, preceding the yield point in the stress-strain curve (S-S curve) obtained by the tensile test. Such resin molding is sometimes provided with so-called annealing treatment which removes the residual warp by, for example, heating the resin molding for not less than the predetermined period generally under the temperature which is the one enabling the residual warp to be released sufficiently and being not lower than the glass transition temperature. For example, the resin molding obtained by using nylon 66 without adding a processing aid shows such S-S curve as indicated in the graph (a) of Fig. 1, but after removing the residual warp by carrying out the above annealing treatment, the resin molding can be rendered as one which shows such S-S curve of which the peak preceding the yield point is disappeared as indicated in the graph (b) of Fig. 1. When the extrusion molding is carried out using nylon 66, for example, the similar shaped article can be obtained by heating the resin molding at a temperature around $100^\circ$C for 1 to 2 hours per 1 cm thickness thereof, for about 30 to 48 hours in case of, for example, large resin molding and remove the residual warp.

The resin composition of the present invention, by formulating the above engineering plastic with the above fluorine-containing polymer, as mentioned above, can be easily crystallized and improve the flow in the course of molding, thus, can reduce the residual warp of the obtained shaped article, can shorten or omit the above annealing treatment in the course of the production process of the shaped articles and, in consequence, can realize the simplification of the equipment and the production process.

In this specification, the above tensile test is the test carried out in accordance with ASTM D 638 and the above S-S curve is the curve obtained by measuring with the universal testing machine (Instron 4302) in accordance with the above tensile test method.

The reason why the resin composition of the present invention has such anneal effect that gives no peak preceding the yield point in S-S curve, similar to one provided with the annealing treatment, is not clear, but it is presumed as the following. That is, the resin molding, as mentioned above, tends to generate the residual warp since orientation and the cooling rate of the resin generally differ between a skin layer (surface layer) and inner layer in the course of molding. The resin composition of the present invention, however, can be crystallized so quickly before generating difference in molding between the skin layer and inner layer that the warp is difficult to be generated.

The resin composition of the present invention, when it is obtained by formulating the above master batch, can be obtained as one having easier crystallizing property and being improved in the above anneal effect. The above easily crystallizable property and anneal effect have not hitherto known as the effect of processing aids.

The resin composition of the present invention, when it is obtained by using the master batch, has easily crystallizable property and anneal effect, and also can show not only the effect as the outer processing aid which can realize the smooth transfer of the resin in the molding machine but also the effect as the inner processing aid which prevents melt fracture. As the processing aid, there has hitherto been obtained one having either one of the above effects as the outer processing aid and as the inner processing aid. The resin composition of the present invention, however, is considered to express the effects as the outer processing aid and as the inner processing aid in the preferably balanced ratio since the above fluorine-containing polymer exists not only on the surface of the above-mentioned pellets or the like but also inside of the above pellets and the like because of the usage of the above master batch.

The composition (1) of the present invention is one prepared by formulating an engineering plastic (A) with a fluorine-containing polymer, wherein the above fluorine-containing polymer accounts for 1 to 10 mass % of the total of a mass of the above engineering plastic (A) and a mass of the above fluorine-containing polymer. When it is less than 1 mass %, the amount of the fluorine-containing polymer in the composition (2), which is mentioned later herein, is too small to obtain such effects as mentioned above. When it exceeds 10 mass %, the shaped article thus obtained may develop opacity or white turbidity, and moreover, the effect of the fluorine-containing monomer is not commensurate with an excessively increased amount, thus leading to economic disadvantage.

The above fluorine-containing polymer includes those fluorine-containing polymers as explained for the above-mentioned resin composition and is preferably a perfluoropolymer.

The above composition (1) may be one used for preparation of a composition (2) by adding an engineering plastic (B) to the above composition (1), as similar to that explained for the above-mentioned resin composition. In this specification, the above engineering plastic (A) and the above engineering plastic (B) are conceptually different in the point that the engineering plastic (A) is one in the above composition (1) and the engineering plastic (B) is one to supplement the above composition (1) , however, these are conceptually common in the point that the engineering plastic as mentioned above is used both for the engineering plastic (A) and the engineering plastic (B). The above engineering plastic (A) and the engineering plastic (B) may be the same or different, usually the same, in the species of the engineering plastic to be used in practice.

The above composition (2) preferably accounts for 0.005 to 1 mass %, more preferred lower limit is 0.01 mass % and more preferred upper limit is 0.5 mass %, of the total of the mass of the engineering plastic (B) and the mass of the fluorine-containing polymer. The reason that the above range is preferred is the same as that is explained for the above resin composition. The above composition (2) is the above-mentioned resin composition of the present invention, which is understandable from the facts the composition (2) is, as explained for the formulation of the resin composition, one obtainable by adding the engineering plastic (B) to the above-mentioned composition (1) and one contains the above-mentioned amount range of the above engineering plastic (A), engineering plastic (B) and fluorine-containing polymer.

The method of producing a shaped article according to the present invention employs the above described resin composition.

The method of producing a shaped article comprises charging a molding machine, such as a screw extruder, with the resin composition. The production procedure after feeding to a molding machine is not particularly limited insofar as it is heat-melt molding. Thus, for example, a conventional process can be used which comprises heating the resin composition fed to a screw extruder or the like molding machine as above to a predetermined molding temperature, with pressure applied where necessary, and molding such as extrusion of the melted resin composition to the die of the molding machine or injection thereof to the metal mold to obtain an article of the desired shape.

In the above method of producing a shaped article, the resin composition of the invention is melted in the heating zone within the molding machine and molded as it departs from the heating zone and enters into the cooling zone. In this process, the resin composition of the invention is conducive to stable transport of the melt from the heating zone to the cooling zone, thus contributing to improved molding processability.

In the resin composition of the invention, as mentioned above, the particles comprising the fluorine-containing polymer adhere to the surface of pellets, for example, of the engineering plastic almost uniformly. Therefore, it may be considered that the particles melt preceding to the melting of the engineering plastic by heating in the molding machine. The fluorine-containing polymer, as mentioned above, tends to melt before the engineering plastic with higher probability, in the case that the polymer is in the form of a powder and/or has a melting point lower than that of the engineering plastic. Therefore, the fluorine-containing polymer can exhibit its lubrication effect sufficiently in the molding machine.

The heating zone in the molding machine, taking an extruder as an example, typically is a melt-extrusion zone, which is usually equipped with a screw and a barrel, and is designed such that a resin composition in the barrel is heated by heaters disposed around the barrel.

The improved molding processability with an extruder, for instance, is attained as the extrusion torque and extrusion pressure are significantly reduced. Thus, depending on the formulation of the resin composition and the molding conditions, in extrusion molding, for instance, the extrusion torque can be reduced to 20 to 80% of the level prevailing in the event of omission of the fluorine-containing polymer from the formulation. Also, the extrusion pressure can be reduced to 40 to 90% of the level prevailing in the absence of the fluorine-containing polymer.

The above method of producing a shaped article is not particularly limited but includes extrusion molding, injection molding, casting (with a metal mold), rotary molding and the like. The above method of producing a shaped article is preferably extrusion molding, injection molding, casting (with a metal mold), rotary molding, and among these, extrusion molding or injection molding is preferred. Extrusion molding is preferred, however, so that the improved effect on molding processability may be more effectively expressed.

The above extrusion molding is a method in which the resin composition of the present invention heated in an extrusion machine to melt is extruded continuously to mold the same. The above injection molding is a method in which the resin composition of the present invention heated and melted in an injection molding machine fills, under pressure, a metal mold closed in one end to mold the resin composition. In this specification, the above extrusion molding and injection molding do not include blow molding, which is a method in which a parison prepared, in advance, from the heated and melted resin composition gets swollen in a metal mold using air pressure and the like, to be made cohere to the above metal mold and to mold the same.

The various extruder operating parameters for use in the above method of producing a shaped article are not particularly limited but may be those conventionally used. The molding temperature is typically a temperature higher than the melting point of the engineering plastic. The molding temperature, when within the above-mentioned range, is typically a temperature below the lower of the decomposition temperature of the fluorine-containing polymer and that of the engineering plastic. Such temperature includes, for example, 250 to 400°C. The molding temperature is sometimes referred to as the extrusion temperature in the case of extrusion molding.

The shaped article obtainable by the above method of producing a shaped article is not particularly limited but includes articles having various configurations or geometries, for example, various sheaths; sheets; films; rods; pipes; and the like.

The use of the shaped article is not particularly limited, but the invention can be applied with advantage to product fields particularly calling for critical mechanical and other dynamic properties and high heat resistance, depending on the kind of engineering plastic that is used. Thus, the shaped article includes but is not limited to space and other machines or devices; machine parts such as gears and cams; electric/electronic parts such as connectors, plugs, switches, enamels for conductor use, etc.; automobiles, aircraft and other vehicles and their component parts; decorative sheets; magnetic tapes, photographic film, gas separating membrane and other films; optical products such as lenses, compact disks, substrates for optical disks, safety goggles, etc.; beverage bottles and other food containers; various heat-resisting medical devices and supplies; and other industrial parts.

BEST MODE FOR CARRYING OUT THE INVENTION

The following examples are intended to describe the present invention in further detail and should by no means be construed as defining the scope of the invention. It should also be understood that the formulating amount (mass %) of the fluorine-containing polymer is based on the total amount of the fluorine-containing polymer and the engineering plastic combined.

Example of Synthesis-1

Synthesis of an FEP copolymer

A 1000-L glass-lined vertical autoclave equipped with a stirring means was charged with 270 kg of pure water and 0.1 kg of ammonium ω-hydroxyfluorocarboxylate and subjected to 3 cycles of nitrogen purging and vacuum degassing. Then, the autoclave was further charged with 233 kg of hexafluoropropylene (HFP) and 2.3 kg of perfluoro (propyl vinyl ether) (PPVE) under vacuum.

The stirrer was started and the temperature of the polymerization vessel was set to 29.0°C. Then, tetrafluoroethylene (TFE) was introduced to increase the pressure to 0.9 MPaG. The autoclave was further charged with 3.8 kg of di(ω-hydrodecafluoroheptanoyl) peroxide (DHP) diluted to about 8 wt % with perfluorohexane, whereupon the reaction began immediately.

During this reaction, the system was supplemented with TFE and the internal pressure of the autoclave was maintained at 0.9 MPaG. After 9, 18 and 27 hours of reaction, PPVE was further added in 0.5 kg portions each, and after 3, 8 and 13 hours of reaction, DHP was further added in 3.8 kg portions each. Moreover, after 18, 23, 28 and 33 hours of reaction, DHP was further added in 1.9 kg portions each. Furthermore, for molecular weight control, 1.7 kg of the chain transfer agent methanol was added at 5 hours after the start of reaction. The reaction was carried out for 37 hours and the unreacted TFE and HFP were driven off to give a granular powder. To this powder was added pure water, and after washing with stirring, the powder was taken out of the autoclave. The powder was dried at 150°C for 24 hours to recover 333 kg of the objective FEP copolymer.

The TFE:HFP:PPVE mass ratio of the copolymer as analyzed with NMR analyzer was 86.6:12.5:0.9.

(Determination of polar functional group content)

A 0.1 mm-thick polymer film obtained by compression-molding the above FEP copolymer at 300°C was scanned with a FTIR spectrophotometer to determine the absorbance. The number of end groups per $10^6$ carbon atoms was calculated by means of the following equation.

$$\text{(the number of polar functional groups per } 10^6 \text{ carbon atoms)} = \text{(absorbance)} \times \text{(CF)} \times \text{(thickness of polymer film)}^{-1}$$

As a result, any such polar functional groups was detected only in a trace amount at the chain terminus; thus five -COOH groups per $10^6$ carbon atoms and no other polar functional groups were found.

(Measurement of melt flow rate (MFR))

In accordance with ASTM D 1238-00 (2000), using a KAYNESS melt index tester (Model 4002), about 6 g of the FEP copolymer obtained above was placed in a 0.376-inch (in. dia.) cylinder maintained at 37.2°±0.5°C and allowed to stand for 5 minutes. After the temperature had reached equilibrium, the resin was extruded through an orifice, 0.0825 inch in diameter × 0.315 inch long, under a piston load of 5000 g and the weight (g) of the resin recovered in a unit time of 10 seconds was determined. Data from three runs were averaged and converted to the extrusion amount per 10 minutes and designated as MFR (unit: g/10 min). The MFR value thus found was 23.5 g/10 min.

Example of Synthesis-2

Synthesis of an FEP copolymer

Except that PPVE was omitted, the procedure of Example of Synthesis-1 was repeated to give a FEP copolymer. The TFE:HFP mass ratio was 86.3: 13.7 and the MFR value was 18.5 g/10 min.

Example of Synthesis-3

Synthesis of a low-molecular-weight PTFE

A 100-L stainless steel (SUS316) autoclave equipped with a stainless steel (SUS316) anchor type stirring impeller and a temperature control jacket was charged with 54 L of deionized water and 11.6 g of ammonium perfluorooctanoate, and the internal atmosphere of the autoclave was replaced with nitrogen gas three times and TFE gas twice under warming at 55°C to remove oxygen. Then, the autoclave was charged with 330 g of $CH_3Cl$ and the internal pressure was adjusted to 0.83 MPaG with TFE gas. The stirring was carried out at 80 rpm and the internal temperature was maintained at 55°C.

Then, a solution of 14.3 g of ammonium persulfate in 1 L of water was introduced under pressure with TFE to adjust the internal pressure of the autoclave to 0.88 MPaG for accelerating the reaction. During this time, the reaction temperature was maintained at 55°C and the stirring speed at 80 rpm. TFE was continuously supplied so that the internal pressure of the autoclave would be consistently maintained at 0.88±0.05 MPaG. When 10.3 kg of TFE had been consumed, the agitation and monomer feeding were stopped and the gas within the autoclave was released down to atmospheric pressure to terminate the reaction. The total reaction time was 5.3 hours. The polymer concentration of the resulting latex was 15.8 mass % and the number average particle diameter of the polymer was 0.18 μm.

This latex was coagulated and washed, and the resulting polymer powder was dried at 150°C for 18 hours. The melt viscosity of the powder at 380°C was $2.0 \times 10^5$ poises, the melting point was 327°C, and the number average particle diameter was 5 μm.

Example of Synthesis-4

Synthesis of an FEP copolymer by emulsion polymerization

A 3-L stainless steel vertical autoclave equipped with a stirring means was charged with 1500 g of distilled water and 280 g of 10 mass % of fluorine-based surfactant ($C_7F_{15}COONH_4$) solution and the internal atmosphere of the autoclave was subjected to nitrogen purging and vacuum degassing. Then, the autoclave was further charged with 115 g of liquid hexafluoropropylene (HFP) and 15 g of mixed gas of tetrafluoroethylene (TFE) and HFP (TFE:HFP=86: 14 (mass %)) and the temperature was gradually increased with stirring. The pressure inside the autoclave at 95°C was increased to 1. 5 MPaG. Ammonium persulfate solution (10 mass %, 13.5 g) was added as a polymerization initiator to thereby start the reaction.

The system was successively supplemented with the mixed gas of TFE and HFP of the same composition as mentioned above so as to the internal pressure of the autoclave was maintained at 1.5 MPaG. After 30 minutes, stirring was stopped, the unreacted TFE and HFP were driven off to give 95 g of dispersion of seed particles of tetrafluoroethylene/hexaflouoropropylene copolymer (FEP). The dispersion of seed particles of FEP obtained had the solid concentration of 5.0 mass %. A portion of the dispersion of seed particles of FEP obtained was subj ected to coagulation using nitric acid to give white powder. The TFE:HFP mass ratio of the copolymer as analyzed with NMR analyzer was 81.6:18.4. The MFR value of the above copolymer was too high to measure.

A 3-L stainless steel vertical autoclave equipped with a stirring means was degassed in advance and charged with 1715 g of degassed and distilled water, 31 g of the above dispersion of seed particles of FEP copolymer and 380 g of liquid HFP. Thereafter, 70 g of mixed gas of TFE and HFP (TFE:HFP=86:14 (mass %)) was charged. The temperature was gradually increased with stirring and the pressure inside the autoclave at 95°C was increased to 4.2 MPaG.

Ammonium persulfate solution (10 mass %, 2.5 g) was added to thereby start the reaction. Immediately after the start of the reaction, 10 mass % of ammonium persulfate solution was successively supplemented and the reaction was continued. The charge speed of the ammonium persulfate solution was 0.027 g/min.

Immediately after the start of the reaction, the system was successively supplemented with the above mixed gas of TFE and HFP and the internal pressure of the autoclave was maintained at 4.2 MPaG. The mixed gas of TFE and HFP was supplemented, during the reaction, so as to the amount of FEP copolymer reaches 20 mass % of the dispersion to be obtained.

The reaction was carried out for 220 minutes, the unreacted TFE and HFP were driven off, and the dispersion was collected. Nitric acid was added thereto as a coagulation agent and water was added to dilute, whereby a powder repelled from water was obtained. FEP copolymer after drying was 425 g.

The TFE: HFP mass ratio of the FEP copolymer was 77.1:22.9 and MFR value was 21.7 g/min.

Example 1

The FEP copolymer obtained by Example of Synthesis-1 was formulated, in a proportion of 0.05 mass %, with nylon 66 (product name: Zytel-42, product of E. I. du Pont de Nemours and Company) and these materials were blended using a paint shaker and molded using an extrusion molding machine (Model RCP-0625, Microtruder, screw size: 5/8 inch, LD: 24/1, sheet die width: 6 inches; manufactured by Randcastle Extrusion Systems, Inc.) at a screw rotational speed of 60 rpm and an extrusion temperature of 280°C. The extrusion torque, extrusion pressure, and extrusion speed are shown in Table 1.

Example 2

Except that the screw speed was set to 80 rpm, the molding operation of Example 1 was otherwise faithfully repeated. The extrusion torque, extrusion pressure, and extrusion speed are shown in Table 1.

Example 3

Except that as FEP copolymer used was obtained by Example of Synthesis-2, the molding procedure of Example 1 was otherwise faithfully repeated. The extrusion torque, extrusion pressure, and extrusion speed are shown in Table 1.

Example 4

Except that the low molecular weight PTFE obtained by Example of Synthesis-3 was used in lieu of the FEP copolymer, the molding procedure of Example 1 was otherwise faithfully repeated. The extrusion torque, extrusion pressure, and extrusion speed are shown in Table 1.

Example 5

Except that Celanex 1200 (product of Hoechst-Celanese) was used in lieu of Zytel-42 as nylon 66, the molding procedure of Example 1 was otherwise faithfully repeated. The extrusion torque, extrusion pressure, and extrusion speed are shown in Table 1.

Example 6

Except that nylon 46 (trade name: Stanyl 441, product of DSM Engineering Plastics, Inc.) was used in lieu of nylon 66 and the screw speed and extrusion temperature were set to 72 rpm and 281°C, respectively, the molding procedure of Example 1 was otherwise faithfully repeated. The extrusion torque, extrusion pressure, and extrusion speed are shown in Table 1.

Example 7

Except that the low-molecular-weight PTFE obtained by Example of Synthesis-3 in lieu of FEP copolymer was formulated in a proportion of 0. 025 mass %, the molding procedure of Example 6 was otherwise faithfully repeated. The extrusion torque, extrusion pressure, and extrusion speed are shown in Table 1. Examples 8 and 9

The molding procedure of Example 1 was repeated, except that the low-molecular-weight PTFE obtained by Example of Synthesis-3 was formulated in the proportions indicated in Table 1, that PEEK (trade name: PEEK 450, product of ICI Victrex Corp.) was used in lieu of nylon 66, and'that the screw speed and extrusion temperature were set to 72 rpm and 360°C, respectively. The extrusion torque, extrusion pressure, and extrusion speed are shown in Table 1.

Examples 10 to 12

The molding procedure of Example 1 was repeated, except that the FEP copolymer obtained by Example of Synthesis-4 was formulated in the proportions indicated in Table 1, that PEEK (trade name: PEEK 450, product of ICI Victrex Corp.) was used in lieu of nylon 66, and that the screw speed and extrusion temperature were set to 72 rpm and 360°C, respectively. The extrusion torque, extrusion pressure, and extrusion speed are shown in Table 1.

Comparative Examples 1 to 12

Except that no fluorine-containing polymer was added, the molding procedures described in Examples 1 to 12 were otherwise faithfully repeated. The extrusion torque, extrusion pressure, and extrusion speed are shown in Table 1.

Table 1

| | | Comp. Ex.1/ Ex.1 | Comp. Ex.2/ Ex.2 | Comp. Ex.3/ Ex.3 | Comp. Ex.4/ Ex.4 | Comp. Ex.5/ Ex.5 | Comp. Ex.6/ Ex.6 | Comp. Ex.7/ Ex.7 | Comp. Ex.8/ Ex.8 | Comp. Ex.9/ Ex.9 | Comp. Ex.10/ Ex.10 | Comp. Ex.11/ Ex.11 | Comp. Ex.12/ Ex.12 |
|---|---|---|---|---|---|---|---|---|---|---|---|---|---|
| Fluorine-containing polymer (% level of addition) | FEP of Ex. Syn.-1 | 0.05 | 0.05 | — | — | 0.05 | 0.05 | — | — | — | — | — | — |
| | FEP of Ex. Syn.-2 | — | — | 0.05 | — | — | — | — | — | — | — | — | — |
| | Low-molecular wt. PTFE of Ex. Syn.-3 | — | — | — | 0.05 | — | — | 0.025 | 0.025 | 0.05 | — | — | — |
| | FEP of Ex. Syn.-4 | — | — | — | — | — | — | — | — | — | 0.0125 | 0.025 | 0.05 |
| Engineering plastic | | Zytel | Zytel | Zytel | Zytel | Celanex | Stanyl | Stanyl | PEEK | PEEK | PEEK | PEEK | PEEK |
| Screw speed (rpm) | | 60 | 80 | 60 | 60 | 60 | 72 | 72 | 72 | 72 | 72 | 72 | 72 |
| Extrusion temperature (°C) | | 280 | 280 | 280 | 280 | 280 | 281 | 281 | 360 | 360 | 360 | 360 | 360 |
| Extrusion torque* (amp) | | 6.5/1.5 | 7.2/2.1 | 5.5/1.8 | 6.1/2.8 | 6.2/1.9 | 4/2 | 4/2.2 | 4/2.6 | 4.1/2 | 4/3 | 4/2.1 | 4/2 |
| Extrusion pressure* (psi) | | 601/320 | 670/380 | 570/300 | 605/345 | 605/300 | 355/270 | 355/250 | 930/730 | 930/750 | 930/825 | 930/780 | 930/785 |
| Extrusion speed* (g/min) | | 20/22 | 24/25 | 20/22 | 20/17 | 20/21 | 15/17 | 15/— | —/— | —/— | —/— | —/— | 16/17 |

*The figure at left represents no addition of a fluorine-containing polymer and the figure at right represents addition of a fluorine-containing polymer.

It is clear from Table 1 that, when a nylon or PEEK was used as the engineering plastic, the extrusion torque and extrusion pressure were reduced significantly in the Examples of the invention, where any of FEP copolymer and low-molecular-weight PTFE, as the fluorine-containing polymer, was formulated with the range of 0.005 to 1 mass % of the mass total of the engineering plastic and the fluorine-containing polymer, as compared with Comparative Examples where no fluorine-containing polymer was added.

Example 13

The FEP copolymer obtained by Example of Synthesis-1 was formulated, in a proportion of 0.05 mass %, with nylon 66 (product name: Zytel-42, product of E. I. du Pont de Nemours and Company) and these materials were blended in a polyethylene bag and molded using an injection molding machine (type: Klockner F85; manufactured by Klockner Ferromatic, Inc.; metal mold: ASTM D 638 type 1 tensile testpiece type) at a barrel temperature of 275 to 280°C, metal mold temperature of 75 to 85°C and injection pressure of 90 to 100 MPa. For the obtained shaped article, tensile test and measurement of density were carried out by the following methods.

(Tensile test)

In accordance with ASTM D 638, the test was carried out using the universal testing machine (Instron 4302). The measurement conditions were such that speed of testing rate of stressing was 5 mm/min and the distance between chucks was 115 mm. The tensile elongation was calculated from the distance of which the crosshead moved.

(Measurement of density)

In accordance with JIS K 7112 Method A (immersion method), density was measured using a balance (manufactured by Mettler K.K., type H33AR). The testpiece was cut out from the flat portion of the center of the tensile testpiece used for the above tensile test.

Example 14

Except that the FEP copolymer was formulated in proportion of 0.1 mass %, the molding procedure of Example 13 was otherwise faithfully repeated. The results of tensile test and measurement of density are shown in Table 2.

Example 15

Except that the FEP copolymer was formulated in proportion of 0.25 mass %, the molding procedure of Example 13 was otherwise faithfully repeated. The results of tensile test and measurement of density are shown in Table 2.

Comparative Example 13

Except that no fluorine-containing polymer was added, the molding procedure of Example 13 was otherwise faithfully repeated. The results of tensile test and measurement of density are shown in Table 2.

Table 2

|  | unit | Ex.13 | Ex.14 | Ex.15 | Comp. Ex.13 |
|---|---|---|---|---|---|
| Yield strength | MPa | 81 | 81 | 82 | 78 |
| Yield strain | % | 4.2 | 4.2 | 4.2 | 4 |
| Modulus of elasticity | GPa | 3.1 | 3.1 | 3.2 | 3 |
| Density | g/cm$^3$ | 1.137 | 1.139 | 1.139 | 1.137 |

The shaped articles of Examples 13 to 15 obtained by formulating the fluorine-containing polymer had increased yield strength, yield strain, modulus of elasticity and the like, than the molding of Comparative Example 13 obtained without adding the fluorine-containing polymer. It is understood that crystallization was proceeded since the density was increased for the shaped articles of Examples.

Example 16

The FEP copolymer obtained by Example of Synthesis-1 was supplied, in proportion of 5 mass %, using a vibratory constant feeder (manufactured by Kubota K.K.) and kneaded with nylon 66, the same type as used in Example 1, at a barrel temperature of 260 to 270°C. The obtained pellets were formulated with nylon 66 so as to the FEP copolymer attained 0.05 mass % and these materials were blended in a polyethylene bag and molded using a injection molding machine (type: Klockner F85; manufactured by Klockner Ferromatic, Inc.; metal mold: ASTM D 638 type 1 tensile testpiece type) at a barrel temperature of 275 to 280°C, metal mold temperature of 75 to 85°C and injection pressure of 90 to 100 MPa. The obtained shaped article was subjected to the same tensile test as carried out in Example 13 and stress-strain curve (S-S curve) was measured. The obtained S-S curve is shown in Fig. 2.

Comparative Example 14

Except that no fluorine-containing polymer was added, the molding procedure described in Example 16 was otherwise faithfully repeated. The S-S curve of the obtained molding on tensile test is shown in graph (a) of Fig. 1.

Comparative Example 15

The molding obtained by Comparative Example 14 was subjected to the heat treatment at a treatment temperature of 100°C and a treatment period of 48 hours to remove the residual warp of the molding. The S-S curve of the obtained molding on tensile test is shown in graph (b) of Fig. 1.

It is clear from Figs. 1 and 2, the shaped article of Example 16 obtained by formulating the fluorine-containing polymer showed the S-S curve with the eliminated peak in front of the yield point without being provided with annealing test, which result was similar to the S-S curve of the molding of Comparative Example 15 obtained without formulating the fluorine-containing polymer but being provided with the annealing treatment.

EFFECT OF THE INVENTION

The resin composition of the invention is prepared by formulating the fluorine-containing polymer in a defined content range and, as such, is conducive to good and stable transport of the melt from the heating zone to the cooling zone of a molding machine, enabling stable production with improved yield and higher productivity of shaped articles and favoring industrial-scale production of engineering plastic products.

The mechanism of the resin composition in providing such favorable results is not fully clear but it seems chiefly attributable to the fact that, in the course of transport of the resin melt from the heating zone to the cooling zone, the fluorine-containing polymer acts as a lubricant across the interface between the internal wall of the molding machine and the resin melt coming into contact therewith. The fluorine-containing polymer in extrusion molding is considered to exert such a lubricating action on surfaces of a revolving screw and a surrounding extruder barrel.

The fluorine-containing polymer exhibiting such a lubricating action may be a molten entity such as FEP in the melt and the molding temperature is selected to be higher than the melting point of FEP; or a non-molten entity such as PTFE in the melt and a molding temperature is selected to be lower than the melting-start point of PTFE. When the fluorine-containing polymer is one which is in a molten state at the molding temperature, it is preferably a polymer not compatible with the engineering plastic so that the above lubricating action may be effectively expressed.

The resin composition of the invention, which is obtainable by formulating the above fluorine-containing polymer, is easy to be crystallized and can realize the reduction in the molding cycle time, simplification of the process equipment, stabilization of the physical property of the obtained shaped article as well as the above-mentioned effects.

With the resin composition of the invention, it is often unnecessary to make a critical selection in regard to the relationship of melting point to molding temperature, for instance, with the result that the fluorine-containing resin can be selected from among a broad variety of polymers, thus broadening the freedom of choice for materials. The lubricating action of the resin composition of the invention can be obtained by formulating the fluorine-containing polymer in a small amount within the above-mentioned range. Thus, the resin composition of the invention is of great industrial value in that it helps to improve the moldability of engineering plastics on a high production scale in a simple manner. Also, despite the generally high cost of the fluorine-containing polymer, the expected effect can be obtained with a small amount of the polymer as mentioned above.

**Claims**

**1.** A resin composition prepared by formulating an engineering plastic with a fluorine-containing polymer

wherein said fluorine-containing polymer accounts for 0.005 to 1 mass% of the total of a mass of said engineering plastic and a mass of said fluorine-containing polymer,
wherein said fluorine-containing polymer is a perfluoropolymer, and
wherein said resin composition is used for extrusion molding or injection molding.

2. The resin composition as claimed in claim 1,
wherein the fluorine-containing polymer is one having a melting point of not lower than 200°C.

3. The resin composition as claimed in claim 1 or 2,
wherein the fluorine-containing polymer is one obtainable by polymerization using tetrafluoroethylene.

4. The resin composition as claimed in claim 1, 2 or 3,
wherein the fluorine-containing polymer is a tetrafluoroethylene/hexafluoropropylene copolymer.

5. The resin composition as claimed in claim 1, 2, 3 or 4,
wherein the fluorine-containing polymer has substantially no polar functional groups reactive to the engineering plastic.

6. The resin composition as claimed in claim 1, 2, 3, 4 or 5,
wherein the engineering plastic comprises a polymer having a phenylene group, and
wherein the fluorine-containing polymer is polytetrafluoroethylene, tetrafluoroethylene/hexafluoropropylene copolymer or tetrafluoroethylene/perfluoro(alkyl vinyl ether) copolymer.

7. The resin composition as claimed in claim 1, 2, 3, 4 or 5,
wherein the engineering plastic comprises a polymer not having phenylene groups, and
wherein the fluorine-containing polymer is tetrafluoroethylene/hexafluoropropylene copolymer.

8. The resin composition as claimed in claim 1, 2, 3, 4, 5, 6 or 7,
wherein the engineering plastic is a polyamide.

9. The resin composition as claimed in claim 1, 2, 3, 4, 5 or 6,
wherein the engineering plastic is a polyetheretherketone.

10. The resin composition as claimed in claim 1, 2, 3, 4, 5, 6, 7, 8 or 9, for use as a molding material.

11. A method of producing the resin composition as claimed in claim 1, 2, 3, 4, 5, 6, 7, 8, 9 or 10,
which comprises producing the resin composition by formulating the engineering plastic with the fluorine-containing polymer.

12. A method of producing a shaped article
which comprises producing the shaped article by melting the resin composition as claimed in claim 1, 2, 3, 4, 5, 6, 7, 8, 9 or 10 and molding by extrusion molding or injection molding.

13. The method of producing the shaped article as claimed in claim 12,
wherein the extrusion molding or the injection molding is carried out at a temperature not lower than a melting point of the engineering plastic.

14. The method of producing the shaped article as claimed in claim 12 or 13,
wherein the fluorine-containing polymer has a melting point not higher than a processing temperature of the engineering plastic.

15. A composition (1) prepared by formulating an engineering plastic (A) with a fluorine-containing polymer
wherein said fluorine-containing polymer accounts for 1 to 10 mass% of the total of a mass of said engineering plastic (A) and a mass of said fluorine-containing polymer,
wherein said fluorine-containing polymer is a perfluoropolymer, and
wherein said composition (1) is used for extrusion molding or injection molding.

16. A method of producing a shaped article

which comprises a step of preparing a composition (2) by adding an engineering plastic (B) to the composition (1) as claimed in claim 15, and

a step of producing the shaped article by melting said composition (2) and molding by extrusion molding or injection molding,

said composition (2) accounting for 0.005 to 1 mass% of the total of a mass of the engineering plastic (A), a mass of the engineering plastic (B) and a mass of the fluorine-containing polymer.

Fig.1

Fig.2

## INTERNATIONAL SEARCH REPORT

International application No.

PCT/JP02/12148

**A. CLASSIFICATION OF SUBJECT MATTER**
Int.Cl⁷ C08L101/00

According to International Patent Classification (IPC) or to both national classification and IPC

**B. FIELDS SEARCHED**

Minimum documentation searched (classification system followed by classification symbols)
Int.Cl⁷ C08L1/00-101/16

Documentation searched other than minimum documentation to the extent that such documents are included in the fields searched

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| X | US 5998339 A (DAIDO METAL CO., LTD.), 07 December, 1999 (07.12.99), Claims; examples & JP 10-204282 A Claims; examples & GB 2321503 A | 1-16 |
| X | JP 3-91556 A (Lion Corp.), 17 April, 1991 (17.04.91), Claims; examples (Family: none) | 1-16 |
| A | JP 6-136255 A (Mitsui Toatsu Chemicals, Inc.), 17 May, 1994 (17.05.94), Claims; examples (Family: none) | 1-16 |

☐ Further documents are listed in the continuation of Box C.   ☐ See patent family annex.

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
28 February, 2003 (28.02.03)

Date of mailing of the international search report
11 March, 2003 (11.03.03)

Name and mailing address of the ISA/
Japanese Patent Office

Authorized officer

Facsimile No.

Telephone No.

Form PCT/ISA/210 (second sheet) (July 1998)